# EUROPEAN PATENT APPLICATION

(11) **EP 1 189 441 A2**
(43) Date of publication of application: **20.03.2002**
(21) Application number: 01307778.9
(22) Date of filing: 12.09.2001
(51) Int. Cl.: H04N 7/173

(54) **Context-sensitive information delivery service**

(30) Priority: 13.09.2000 US 660853
(71) Applicant: Hewlett-Packard Company, Palo Alto, CA 94304 (US)
(72) Inventor: Wilhelmi, William J., West Linn, Oregon 97068 (US); Smith, Donald X., Corvallis, OR 97330 (US); Lindley, Martyn, Eugene, OR 97404 (US)
(74) Representative: Jackson, Richard Eric

(57) **Abstract**

Viewer interaction is allowed during a broadcast (11,31). A broadcast signal (16) originating at a broadcast station (10,30) is received. Also received is notification concerning additional interaction that is available to a viewer of a first program within the broadcast (11,31) signal. Information (82,83) is overlayed on a signal (11,31) for the first program. The overlayed information (82,83) provides to the viewer notification of availability of additional interaction associated with the first program. The signal (11) for the first program with the overlayed information (82,83) is output for display (81) on a viewing device.

## Description

### BACKGROUND

The present invention concerns remote access of data and pertains particularly to context-sensitive information delivery service

In the past, when a consumer viewing or listening to a program or broadcast wanted related information, it was been necessary to call a telephone number or write to a particular address to access the information.

The internet is changing the way companies do business. Companies now can advertise their web addresses. Users can log onto the world wide web and can instantaneously access any of hundreds of millions of web pages. This has increased the ability of users to immediately access information.

Despite the great progress in information delivery, there is still a desire to make the access of information even more convenient.

### SUMMARY OF THE INVENTION

In accordance with the preferred embodiment of the present invention, viewer interaction is allowed during a broadcast. A broadcast signal originating at a broadcast station is received. Also received is notification concerning additional interaction that is available to a viewer of a first program within the broadcast signal. Information is overlayed on a signal for the first program. The overlayed information provides to the viewer notification of availability of additional interaction associated with the first program. The signal for the first program with the overlayed information is output for display on a viewing device.

For example, the overlayed information indicates there is document available to be printed. A request by the viewer for the document is detected. Then a request can be sent for the document. When the document is received it is sent out to a printer for printing.

Alternatively, the additional information indicates there is a product available to be ordered. A request by the viewer to order the product is detected. In response, a request is sent to order the product.

Alternatively, the additional information indicates there is an opportunity to vote. A vote by the viewer is detected. The vote is forwarded to a polling station.

In the preferred embodiment, the broadcast signal is received over a television cable system. Alternatively, the broadcast signal is received via satellite transmission. The viewing device is, for example, a television set or a computer display.

In an alternative embodiment of the present invention, an indicator is overlayed on an audio broadcast, allowing, for example, a listener to acquire printed documents while listening to a radio broadcast.

The present invention facilitates quick and convenient interaction of a viewer with a broadcast program.

### BRIEF DESCRIPTION OF THE DRAWINGS

Figure 1 is a simplified block diagram of a system that implements a context-sensitive document delivery system in accordance with a preferred embodiment of the present invention.

Figure 2 is a simplified block diagram of a system that implements a context-sensitive document delivery system in accordance with an alternative preferred embodiment of the present invention.

Figure 3 is a block diagram of a smart receiver used in system that implements a context-sensitive document delivery system in accordance with a preferred embodiment of the present invention.

Figure 4 is a simplified block diagram that illustrates user perspective of a system that implements a context-sensitive document delivery system in accordance with a preferred embodiment of the present invention.

Figure 5 is a simplified flowchart that illustrates operation of software engine within a smart receiver in accordance with a preferred embodiment of the present invention.

Figure 6 is a simplified block diagram that illustrates user perspective of a system that implements a context-sensitive document delivery system in accordance with an alternative preferred embodiment of the present invention.

### DESCRIPTION OF THE PREFERRED EMBODIMENT

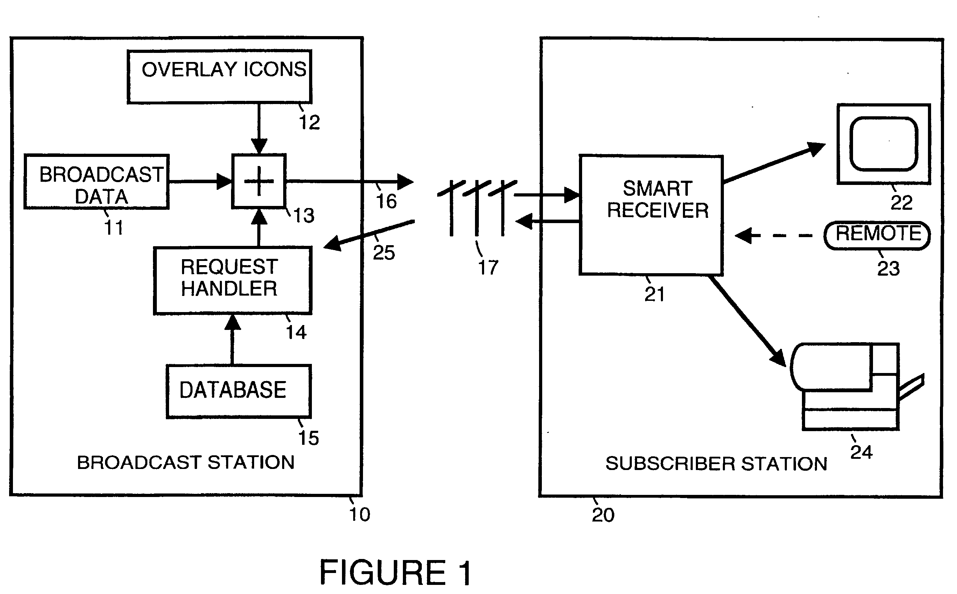

Figure 1 is a simplified block diagram of a system that implements a context-sensitive document delivery system. A broadcast station 10 has broadcast data ready to be transferred, for example, through a cable system 17, through a satellite transmission system, or through some other transmission media. Before transmission, additional information 12 is added to the broadcast data by an encoder 13 to produce a transmission signal 16. Additional information 12 includes, for example, overlay icons and overlay menus used for context sensitive document delivery.

The appearance of specific user interface designs, menu behavior and organization can vary based on the host system. For example, on a web TV implementation, the icon and menus are selected to match the system's design. On a different platform, such as a set-top box provided by a cable TV service provider, the user interface can be modified to match that platform.

At a subscriber station 20, a smart receiver 21 receives the broadcast data and the additional encoded information. When a user selects a television channel to watch on a television monitor 22, smart receiver 21 determines whether there is any overlay information to be displayed with the current program. If so, smart receiver 21 overlays the overlay image on the display. For example, the overlay information includes an overlay icon and/or menu items.

Using a remote control device 23, the user then can select a menu item. The menu item, for example, represents a request for printed material. Smart receiver 21 processes the selection and sends a message 25 back to a request handler 14 within broadcast station 10. Request handler 14 accesses a database 15 to obtain the requested document. Encoder 13 encodes the document to produce transmission signal 16. Smart receiver 21 extracts the document sends it to a destination device 24. In Figure 1, destination device 24 is shown to be a printer. Alternatively, destination device could be a storage device such as a disk drive, a personal digital assistant (PDA), an e-mail address, or some other destination that will accept data.

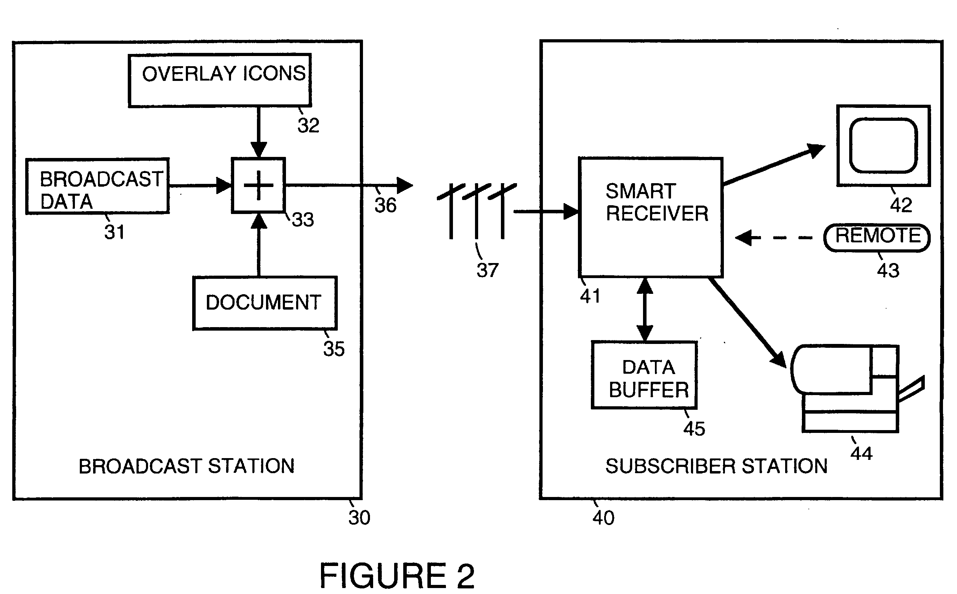

Figure 2 is a simplified block diagram of another embodiment of a system that implements a context-sensitive document delivery system. A broadcast station 30 has broadcast data ready to be transferred, for example, through a cable system 37, through a satellite transmission system, or through some other transmission media. Before transmission, additional information 32 is added to the broadcast data by an encoder 33 to produce a transmission signal 36. Additional information 32 includes, for example, overlay icons and overlay menus used for context sensitive document delivery. Encoder 33 also encodes the document 35 when producing transmission signal 36. Document 35 represents all data which can be requested using the overlay icons and overlay menus. Data 35 can be text, audio, video or some other type of data.

At a subscriber station 40, a smart receiver 41 receives the broadcast data and the additional encoded information. The document is stored in a large data buffer 45. When a user selects a television channel to watch on a television monitor 42, smart receiver 41 determines whether there is any overlay information to be displayed with the current program. If so, smart receiver 41 overlays the overlay image on the display. For example, the overlay information includes an overlay icon and/or menu items.

Using a remote control device 43, the user then can select a menu item. The menu item, for example, represents a request for printed material. Smart receiver 41 processes the selection and accesses the requested document from data buffer 45 and prints it on a printer 44.

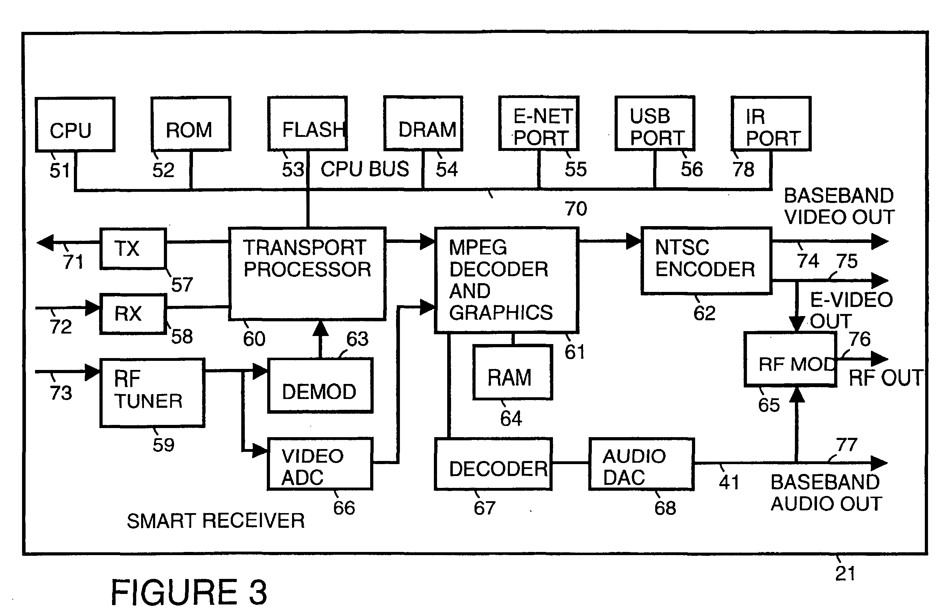

Figure 3 is a block diagram of smart receiver 21. Connected to a central processing unit (CPU) bus 70 is a CPU 51, read only memory (ROM) 52, flash memory 53, dynamic random access memory (DRAM) 54, an Ethernet port 55, a USB port 56, an infrared (IR) port 78 and a transport processor 60. For example, printer 24 is connected to smart receiver 21 via Ethernet port 55 or USB port 56. IR port 78 is used to receive signals from remote control device 23.

A radio frequency (RF) tuner 59 extracts broadcast data information 73 from transmission signal 16. A transmitter (TX) 57 and a receiver (RX) 58 act as cable modem to send and receive additional data through cable system 17. For example, signals 72 include overlay icons menu labels and document. Signals 71 represent information sent from smart receiver 21 to broadcast station 10. RF signals received by RF tuner 59 are demodulated by a demodulator (DEMOD) 63. RF signals received by RF tuner 59 are also converted by a video analog-to-digital converter (ADC) 66.

MPEG decoder and graphics block 61 performs the overlay of overlay icons and menu items on the broadcast signal. Local storage for MPEG decoder and graphics block 61 is provided by random access memory (RAM) i64. National Television System Committee (NTSC) encoder 62 encodes the resulting signal to produce a baseband video out signal 74, and an e-video out signal 75. A decoder 67 and an audio digital to analog converter (DAC) 68 are used to produce a baseband audio out signal 77. An RF modulator (RF MOD) produces an RF output signal 76. In Figure 3, an NTSC encoder 62 is shown used. For equipment used in Europe or Asia, the encoder could be, for example, a Public Access Line (PAL) encoder.

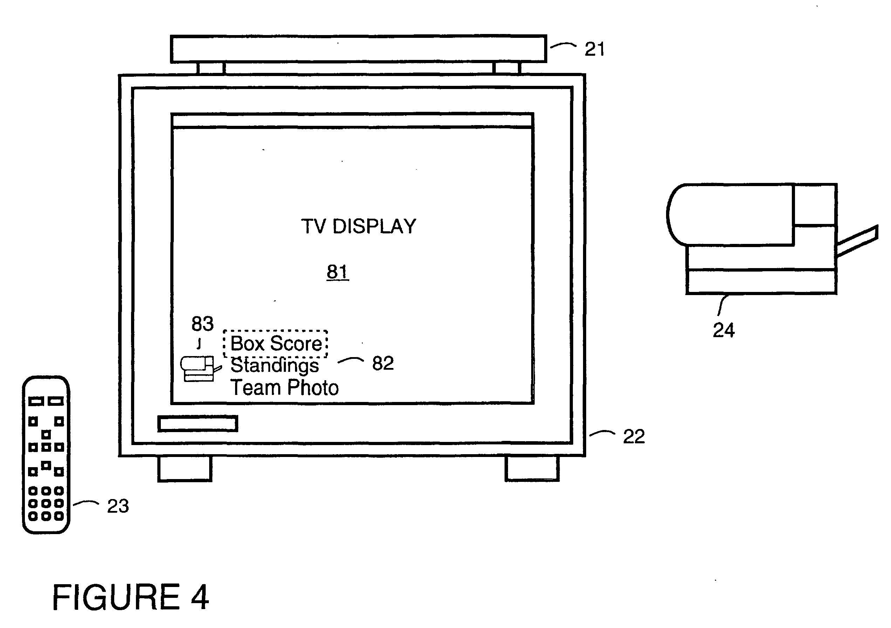

Figure 4 is a simplified block diagram that illustrates the user perspective of the subscriber station. Smart receiver 21, for example, rests on top of television 22. Over the typical television display 81 is placed an overlay icon 83 and menu items 82. By selecting one of the menu items using remote control device 23, a user can have the selected item printed out on printer 24. For example, the television display is displaying a baseball game and menu items disclose information available pertaining to the teams that are playing.

Smart receiver 21 determines the existence of printable content for a given program, and then retrieves that information and prints it for the user. This enables users to receive a service on impulse, rather than call or write away for it. It also requires very little input from the user.

For example, a person watching a cooking show on cable TV may want to obtain a copy of a recipe being used on the show. The cooking show makes the recipe available as a printable file. During the cooking show, a print icon appears on every viewer's displays indicating that some printable material exists related to this show. A user presses a print button on remote control device 23 and the recipe prints immediately on printer 24. Alternatively, if more that one recipe is available, pressing the print button displays a menu of items that can be printed. The user selects from the list and presses the print button again.

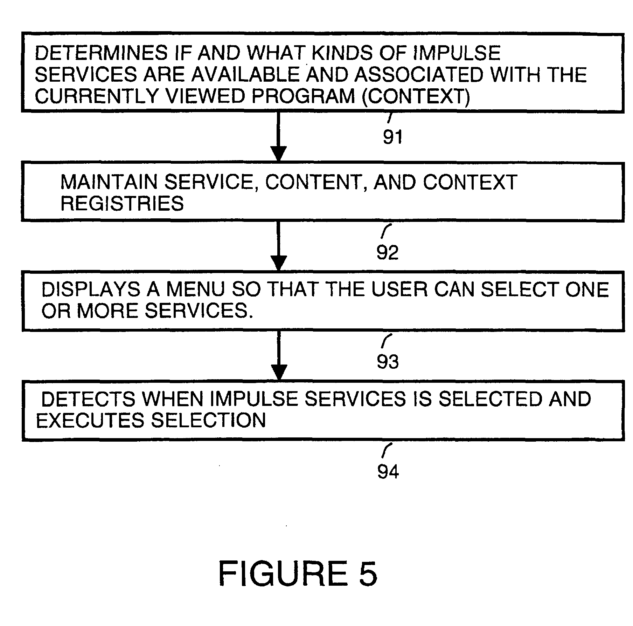

Figure 5 is a simplified flowchart that illustrates operation of a software engine that is stored in ROM 52 and runs on CPU 51 (shown in Figure 3) within smart receiver 21. In a step 91, the software engine determines if and what kinds of impulse services are available and associated with a currently viewed program. As illustrated by step 92, the software engine maintains service, content, and context registries that are stored within DRAM 54.

For example, the registries contain information about what services are available (printing, e-mail, storing, voting, ordering, etc.), what content is available (printable information, ballots, pre-filled order forms, etc.), and what contexts are available (television program, advertisement, on-line tutorial etc.). Smart receiver 21 brokers requests from broadcast station 10 to add, delete, and modify information in the registries. The software engine also provides context sensitive service selection information to the user interface (i.e., television 22 or a computer monitor).

As illustrated by step 93, the software engine, utilizing communication through transport processor 60 to MPEG decoder and graphics block 61, causes an overlay icon and/or menu to be displayed so that the user can select one or more services (as illustrated by overlay icon 83 and menu items 82 shown in Figure 4).

In a step 84, the software engine detects when a menu item (impulse service) is selected by a user, and then executes the selection. For example, this is done by obtaining and printing out selected documents. Alternately, menu items can be, for example, to place an order for goods or services, or to make a vote. In executing this step, a user interface (such as remote control device 23, a button, a computer keyboard or a mouse) is used by the user to make selections. The software engine then determines whether further information from broadcast station 10 is required. Also, as necessary, information such as an order form or a ballot is sent back to broadcast station 10.

While, the present invention has been illustrated using print information made available by a cable television transmission, variations on the preferred embodiment of the present invention can be used in numerous and varied applications. For example, a user views a video on a web site using a web browser. During the video, a print icon appears on the user's display indicating that some content related to the video is available for immediate printing. The user clicks on the print icon and a sheet of information immediately prints on their printer.

Or for example, a viewer is watching a shopping network and wants to order an item being displayed. Pressing a button on remote control device 23 displays a menu on television 21, from which the user can select to order the item. The use can be billed for the item, for example, on a cable TV bill. The name and address of the user can be determined from information stored by smart receiver 21 or by the cable company.

Or for example, a user views a cooking show and wants the recipe that is currently demonstrated. In anticipation of this, a print icon appears on the display (television or computer monitor) indicating that something is available. The user presses the print key on a remote control to display a menu of items available for printing. This menu lists items relevant to only this show. The user presses the appropriate remote control arrow keys to select the desired recipe and then presses the print button again to print the recipe on a local or some selected printer. ("Printing" could be configured to mean an email address.)

For example, a person is watching a program on earthquakes on satellite television. During the program, a print icon appears on the display indicating that something relevant to the show is available for immediate printing. The user presses the print button on the remote control, and then selects to print a 2-page document on earthquake emergency preparedness. The document prints on a printer attached to the satellite service's set top box.

One item in the print menu can be an active button to subscribe to a magazine. Activating that button automatically subscribes the user, without any further input from the user. The subscription application retrieves name and address information from the user's satellite subscription account. The subscription is billed automatically to the account.

For example, on cable television a program presents a business segment. A user watching the program see a print icon appearing and hear the newsperson announce that a page of statistics on the most active stocks for the day is available for printing. The user can then use a remote control to select to print that document. The document prints on a printer connected to the cable set-top box.

For example, a user watching a shopping network sees an electronic kitchen gadget for sale and wants more information. A print icon appears indicating that product information is available for printing. The user presses the print button on the remote and displays a menu of items. The product information can be selected for local printing. Furthermore, the user can select an active button to immediately order the item. The program compiles an order using the person's cable billing account information (obtained electronically through the cable system), and forwards the order to the shopping network. The billing for the item appears on the user's cable TV monthly billing.

For example, a person views an on-line training CD-ROM on a computer. The program presents instruction through various media-animation, video, graphics, slides, etc. While viewing any of these segments of the training, a print icon can appear indicating that something relevant to the currently viewed segment is available for printing. The user clicks on a print icon and a page of information, such as a reference table or chart, is printed. The page can be obtained automatically from the CDROM or from a remote location.

For example, a user views an interactive program on a web site. While viewing the program, a print icon appears on the display. Clicking on the icon prints a page of relevant reference information.

For example, a person viewing a daytime talk show on web TV about cancer sees that a print icon appears in the display. The user clicks on the print icon to view a menu of items to print. The user selects the list of cancer research organizations and support groups to print. The information is printed on the local printer while the person continues to view the program. The print menu might also contain active web site addresses that the viewer can click on and browse to.

For example, a user is listening to a radio program in which an interesting author is interviewed. During the interview, the radio program signals that information about the author is available. The signal may be, for example, a unique tone or sequence of tones. A user presses a recover button on the radio in order to obtain a copy (written or audio recording) of information available from the program. This information, is for example, e-mailed to an e-mail address for the driver. The information, if in textual form, can also be printed, either in the car or in a remote location. The driver doesn't have to search around for a pen to write the information down.

For example, while participating in a videoconference, a person sees that the slides being presented from the distant site are available for immediate printing. The person presses a print button on the videoconference control console, printing the slides.

For example, a national TV news program covers national elections. It displays an icon indicating that viewers can select from a menu that they have or will vote for. Such polling can aid the news. Currently news programs rely on web sites and special telephone numbers for polling.

For example, toward the end of a sitcom, an icon appears asking the viewer to rate the show. This adds more precise viewer data than current program rating systems allow. Pressing a remote control button displays a menu of voting choices from which the viewer can choose. The vote is forwarded to a central polling site where votes are compiled. Ratings of the show can actually be displayed during the show. Perhaps a show might want people to rate different segments of the show.

For example, while viewing a previously recorded documentary on a video tape or on a digital video disk (DVD), a user sees the icon indicating the availability of printable material. The user then selects the information to print from the display. The software engine recognizes the signal from the video tape player, fetches the appropriate information and then prints it locally for the user. The information can be stored, for example, on the DVD with the program or fetched by a reference to a URL on the internet.

For example, during the broadcast of an advertisement for a snack food, an icon appears in the television display indicating that some further information about the advertised product is available for printing. The viewer selects to print that information. A page describing the nutritional value of the product as well as store coupons is printed.

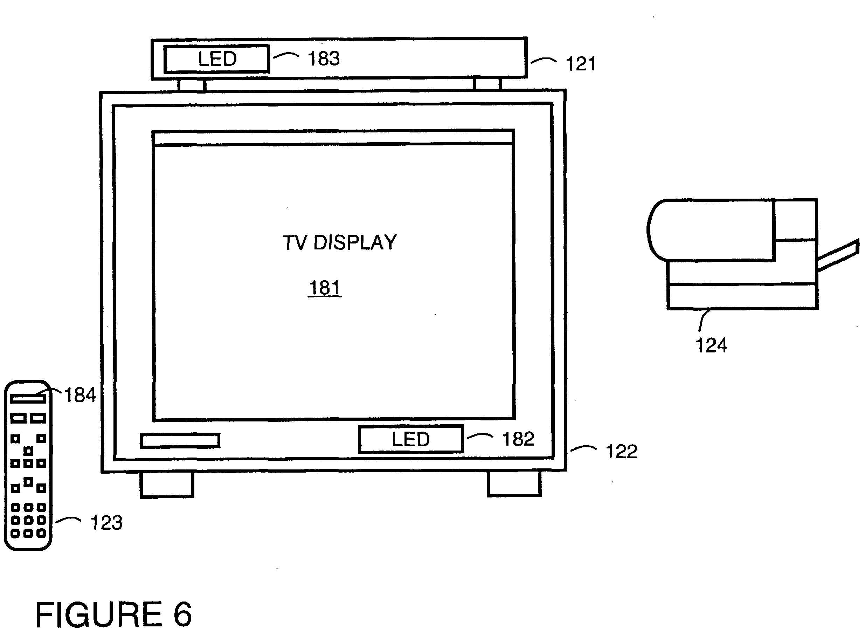

Figure 6 is a simplified block diagram that illustrates the user perspective of the subscriber station in an alternate embodiment. A smart receiver 121, for example, rests on top of a television 122. A typical television display 181 is unchanged. An LED display 183 is located on the housing of smart receiver 121. Alternatively, an LED display 182 is located on the housing of television 122. Alternatively, an LED display 184 is located on a remote control device 123. Each LED may alternatively be an LCD. The function of the LED or LCD is to inform a viewer that a show being watched has printable content available. By selecting a menu item using remote control device 123, the viewer can have the selected item printed out on a printer 124. For example, the television display is displaying a baseball game and menu items disclose information available pertaining to the teams that are playing.

In one embodiment, the LED or LCD display only signals when printable content is being available on the show being watched. Alternatively, the LED or LCD display indicates channels for which printed material is available. Also, in addition to signal that printed material is available using the LED or LCD, an audible tone can also be generated to indicate to a view that printable content is available.

The foregoing discussion discloses and describes merely exemplary methods and embodiments of the present invention. As will be understood by those familiar with the art, the invention may be embodied in other specific forms without departing from the spirit or essential characteristics thereof. Accordingly, the disclosure of the present invention is intended to be illustrative, but not limiting, of the scope of the invention, which is set forth in the following claims.

## Claims

1. A method for delivering user selected information (35) during a broadcast (11,31) comprising the following steps:
(a) presenting the broadcast (11,31) to a user, including the following substep:
(a.1) adding to the broadcast (11,31) an indication (12) indicating to the user additional information (35) is available; and,
(b) in response to the user selecting to receive additional information (35), performing the following substep:
(b.1) delivering the additional information (35) to the user.

2. A method as in claim 1 wherein substep (b.1) includes printing the additional information (35) on a printer (24,124).

3. A method as in claim 1 wherein in step (a.1) the indication (12) is information (82,83) overlayed on the broadcast (11,31).

4. A method as in claim 3 wherein in step (a.1) the overlay information is an icon (83) that indicates there is print material available.

5. A method as in claim 3:
wherein in step (a.1) the overlay information is an icon (82,83) that indicates there is print material available; and,
wherein substep (b.1) includes printing a document on a printer (24,124).

6. A method as in claim 1 wherein in step (a) the broadcast (11,31) is an audio (radio) broadcast (11,31).

7. A method as in claim 1 wherein in substep (a.1) the indication (12) is at least one special tone.

8. A method as in claim 1 wherein in step (a) the broadcast (11,31) is a television broadcast (11,31), and step (a.1) is accomplished by signaling the user via a display (182,183) that is separate from a television display (181).

9. A method as in claim 1 wherein in step (a) the broadcast (11,31) is a television broadcast (11,31), and step (a.1) is accomplished by generating an audio signal.

10. A method as in claim 1 wherein in step (a) the broadcast (11,31) is a television broadcast (11,31), and step (a.1) is accomplished by signaling the user via a display (182,183) that is separate from a television display (181) and by generating an audio signal.
